# EUROPÄISCHE PATENTSCHRIFT

(11) **EP 2 875 893 B1**
(45) Veröffentlichungstag und Bekanntmachung des Hinweises auf die Patenterteilung: **28.07.2021**
(21) Anmeldenummer: 13193726.0
(22) Anmeldetag: 20.11.2013
(51) Int. Cl.: B23F 23/04, B23F 19/02

(54) **Vorrichtung zum Läppen oder Prüfen von Zahnrädern**
Device for lapping or testing of gear wheels
Dispositif de rodage ou de contrôle de roues dentées

(43) Veröffentlichungstag der Anmeldung: 27.05.2015
(73) Patentinhaber: Klingelnberg AG, 8050 Zürich (CH)
(72) Erfinder: Müller, Hartmuth, 42857 Remscheid (DE)
(74) Vertreter: Janke Scholl Patentanwälte PartG mbB

(56) Entgegenhaltungen:
- DE-U1- 29 703 157
- JP-A- 2008 114 341
- US-A- 3 611 800
- US-A- 4 678 393
- US-A1- 2008 056 837
- None

## Beschreibung

### Gebiet der Erfindung

Gegenstand der Erfindung ist eine Vorrichtung. Insbesondere geht es um Vorrichtungen zum Ausführen von Messungen/Prüfungen an Werkstücken und um Vorrichtungen zum Läppen von Werkstücken.

### Hintergrund der Erfindung, Stand der Technik

Es gibt zahlreiche Mess- bzw. Prüfverfahren, die im Rahmen der Fertigung von Zahnrädern und Getrieben zum Einsatz kommen.

Bei einem Teil dieser Mess- bzw. Prüfverfahren werden zwei Zahnräder miteinander in Eingriff gebracht und angetrieben (Eingriffsdrehung genannt), um zum Beispiel ermitteln zu können, wie gut diese beiden Zahnräder miteinander gepaart werden können. Auf diesem Wege kann zum Beispiel die optimale Einbaulage ermittelt werden.

Um solche Mess- bzw. Prüfverfahren an Spiralkegelrädern durchführen zu können, kommen zusätzlich zu der Eingriffsdrehung typischerweise eine oder mehrere relative Verlagerungsbewegungen (hier Zusatzbewegungen genannt) zum Einsatz.

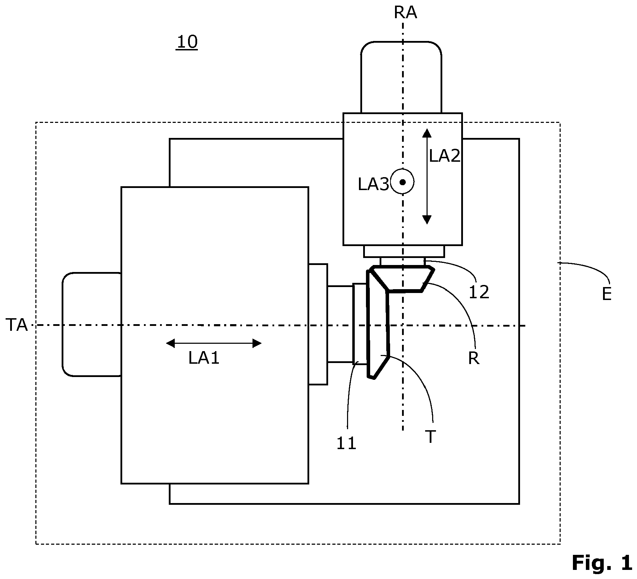

Das Durchführen solcher Mess- bzw. Prüfverfahren an Spiralkegelrädern bedingt somit einen speziellen Maschinenaufbau mit entsprechenden Achsen. Eine solche Maschine wird hier generell als Testmaschine oder kurz auch als Tester bezeichnet. Ein beispielhafter Tester 10 ist in Fig. 1 in stark vereinfachter Form gezeigt. Ein geeigneter Tester 10 hat eine erste Spindel 11 zum Aufnehmen eines Tellerrads T, wobei das Tellerrad T im eingespannten Zustand um die Tellerradachse TA drehbar gelagert ist. Ausserdem gibt es eine zweite Spindel 12, die zum Aufnehmen eines Ritzels R ausgelegt ist. Die zweite Spindel 12 ermöglicht das Drehen des Ritzels R um die Ritzelachse RA.

Die entsprechenden Tester 10 besitzen insgesamt fünf Freiheitsgrade, um die Eingriffsdrehungen und die erwähnten Zusatzbewegungen zwischen Ritzel R und Tellerrad T zu ermöglichen. Insgesamt sind hier sind fünf Achsen vorgesehen und zwar zwei Rotationsachsen TA, RA für die Eingriffsdrehung (bei einem Tester 10 sind diese mit entsprechenden Gebern, z.B. Winkelgebern, versehen) und drei Linearachsen LA1, LA2, LA3.

Der Tester 10 ermöglicht eine Relativbewegung LA1 in Richtung der Tellerradachse TA und eine Relativbewegung LA2 in Richtung der Ritzelachse RA. Zusätzlich kann typischerweise der Abstand (parallel zu LA3) zwischen der Tellerradachse TA und der Ritzelachse RA verstellt werden, was als dritter Freiheitsgrad bezeichnet wird. Die entsprechenden Linearverschiebungen dienen auch dazu das Einbaumass anzupassen.

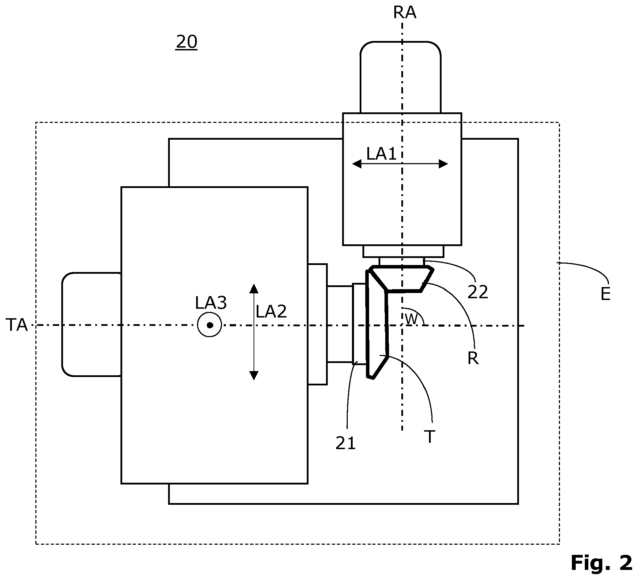

Es gibt neben den erwähnten Messmaschinen 10 auch Läppmaschinen 20, die eine vergleichbare Achskonstellation mit fünf Freiheitsgraden haben. Das Läppen ist ein Verfahren, das zur Endbearbeitung (Fertigbearbeitung nach dem Härten) der Zahnflächen von Kegelradpaaren (Kegelgetrieben) eingesetzt wird. Nachdem in einer solchen Läppmaschine 20, wie in Fig. 2 schematisch gezeigt, ein Tellerrad T an einer ersten Spindel 21 und ein damit zu paarendes Ritzel R an einer zweiten Spindel 22 befestigt wurde, wird typischerweise das Ritzel R angetrieben während das Tellerrad T im Eingriff mit dem Ritzel R mitläuft bzw. gebremst wird. Während die beiden Räder T und R so eine kontinuierliche Eingriffsdrehung ausführen, kommt eine Läppflüssigkeit (z.B. ein Öl mit Siliziumcarbid) als Schleifmittel zum Einsatz. Die erwähnte(n) Zusatzbewegung(en) werden beim Läppen ausgeführt, um die Läppwirkung auf die ganze Zahnflankenoberfläche beider Räder T und R zu erstrecken.

Die Relativbewegungen der beiden beispielhaften Maschinen 10 und 20 in den Figuren 1 und 2 sind identisch. Lediglich die Anordnung oder Zuordnung der einzelnen Linearachsen LA1 bis LA3 wurde in diesen Beispielen unterschiedlich gewählt.

Von den Herstellern von Läppmaschinen werden Maschinen angeboten, die sich im Wesentlichen durch unterschiedlich ausgelegte Zusatzbewegungen voneinander unterscheiden. Die meisten Läppmaschinen können drei Linearbewegungen ausführen, wobei die beiden Horizontalbewegungen LA1, LA2 ein Muss sind, da sonst eine Verschiebung des Ritzels R sehr schnell zum Aufbrauchen des Flankenspiels und zum Klemmen führt, wenn das Tellerrad T nicht entsprechend mitbewegt würde. Eine Vertikalachse LA3 wird für das Läppen von Hypoidgetrieben zur Einstellung des Achsversatzes benötigt und kann natürlich auch zur Tragbildverlagerung beim Läppen benutzt werden.

Bei Maschinen, die automatisch beschickt werden sollen, muss mindestens eine der Linearachsen (z.B. bei Fig. 2 die zweite Linearachse LA2) einen langen Verfahrweg haben, um erst das Ritzel R und dann das Tellerrad T entnehmen zu können. Zur Entnahme der Zahnräder R und T muss ein ausreichend grosser Abstand zwischen den Zahnrädern R und T vorgegeben werden können.

Aus der publizierten Patentanmeldung US 2008/056837, die die Basis für den Oberbegriff des Anspruchs 1 bildet, ist eine Vorrichtung bekannt, die als Testmaschine und Läpper ausgelegt ist. Diese Vorrichtung umfasst drei Linearachsen, die als X-, Y- und Z-Achsen bezeichnet sind und die zusammen ein karthesisches Koordinatensystem bilden. Ausserdem umfasst diese Vorrichtung zwei Spindelgruppen mit je einer Spindel-Rotationsachse. Eine der Spindelgruppen weist zusätzlich eine Schwenkachse auf, die als B-Achse bezeichnet ist und die senkrecht zu den Spindel-Rotationsachsen steht.

Um hohe Genauigkeiten und Steifigkeiten gewährleisten zu können, müssen bei solchen Testern 10 und Läppmaschinen 20 die Linearachsen konstruktiv aufwendig und präzise umgesetzt werden. Das führt zu technisch anspruchsvollen und teueren Maschinen.

Aufgabe der vorliegenden Erfindung ist es, eine Maschinenkonstellation zu entwickeln, die ausreichend steif ist, um sowohl zum Messen/Prüfen (Testen) von Zahnradpaaren als auch zum Läppen von Zahnradpaaren eingesetzt werden zu können.

Die Erfindung soll ein genaues und zuverlässiges Messen/Prüfen (Testen) von Zahnrädern, wie zum Beispiel einem Zahnradpaar, das ein Ritzel und ein Tellerrad umfasst, ermöglichen.

Insbesondere geht es hier um bogenverzahnte Kegelräder, die getestet und/oder geläppt werden sollen.

Eine Vorrichtung der Erfindung zeichnet sich durch die Merkmale des Patentanspruchs 1 aus. Eine Anlage der Erfindung umfasst mindestens eine solche Vorrichtung sowie die zusätzlichen Merkmale des Anspruchs 8.

Weitere bevorzugte Ausführungsformen sind den jeweiligen Unteransprüchen zu entnehmen.

Der Aufbau der erfindungsgemässen Vorrichtung bzw. Anlage mit zwei Linearachsen und mindestens einer Schwenkachse ist besonders vorteilhaft, da er eine hohe Eigensteifigkeit und damit Genauigkeit gewährleistet. Ausserdem ist als ein Vorteil anzusehen, dass durch das Wegschwenken eines der beiden Zahnräder eine einfache Beschickbarkeit oder Entnahme von Zahnrädern möglich wird.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Draufsicht eines konventionellen Testers, der dazu ausgelegt ist ein Ritzel und ein Tellerrad in Eingriff zu bringen und miteinander abzurollen;
- **FIG. 2**: zeigt eine schematische Draufsicht einer weiteren konventionellen Maschine, die dazu ausgelegt ist ein Ritzel und ein Tellerrad in Eingriff zu bringen und miteinander abzurollen;
- **FIG. 3A**: zeigt eine schematische Draufsicht einer ersten erfindungsgemässen Vorrichtung, die dazu ausgelegt ist ein Ritzel und ein Tellerrad in Eingriff zu bringen und miteinander abzurollen;
- **FIG. 3B**: zeigt eine schematische Draufsicht der ersten Vorrichtung nach Fig. 3A, wobei das Ritzel durch ein Schwenken um eine Schwenkachse aus einem aktiven Bereich der Vorrichtung heraus bewegt wurde;
- **FIG. 4**: zeigt eine schematische Draufsicht einer weiteren Vorrichtung der Erfindung,
- **FIG. 5**: zeigt eine schematische Draufsicht einer weiteren Vorrichtung der Erfindung, wobei diese Vorrichtung ein Portal umfasst, das mit zwei beweglichen Greifergruppen bestückt ist, die es ermöglichen Tellerräder und Ritzel zu- und abzuführen.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Als Läppen wird hier das ineinander greifende Drehen von zwei Getriebeelementen (z.B. ein Tellerrad T und ein Ritzel R) bezeichnet, wobei es zwischen den Zahnflanken der Getriebeelemente T und R zum Kontakt kommt und wobei ein Läppmittel eingebracht wird, damit ein Abtrag an den Getriebeelementen T und R erfolgt. Die Mittel zum Einbringen des Läppmittels sind in den Figuren nicht gezeigt, da dem Fachmann derartige Lösungen hinlänglich bekannt sind.

Die Vorrichtung 100 der Erfindung ist speziell zum Läppen oder zum Testen von Zahnrädern ausgelegt. Sie umfasst eine erste Spindelgruppe 111 (vorzugsweise in Form eines Spindelstocks 101 mit darin drehbar angeordneter Spindel 102) zum Einspannen eines ersten Zahnrads T. Das erste Zahnrad T ist um eine erste Rotationsachse TA drehbar in der ersten Spindelgruppe 111 gelagert. Die erste Rotationsachse TA verläuft hier parallel zur Zeichenebene, es handelt sich hier also um eine Horizontalachse. Die Vorrichtung 100 umfasst eine zweite Spindelgruppe 112 (vorzugsweise in Form eines Spindelstocks 103 mit darin drehbar angeordneter Spindel 104) zum Einspannen eines zweiten Zahnrads R, wobei das zweite Zahnrad R in der zweiten Spindelgruppe 112 drehbar um eine zweite Rotationsachse RA lagerbar ist. Auch die zweite Rotationsachse RA verläuft in der hier gezeigten Stellung parallel zur Zeichenebene.

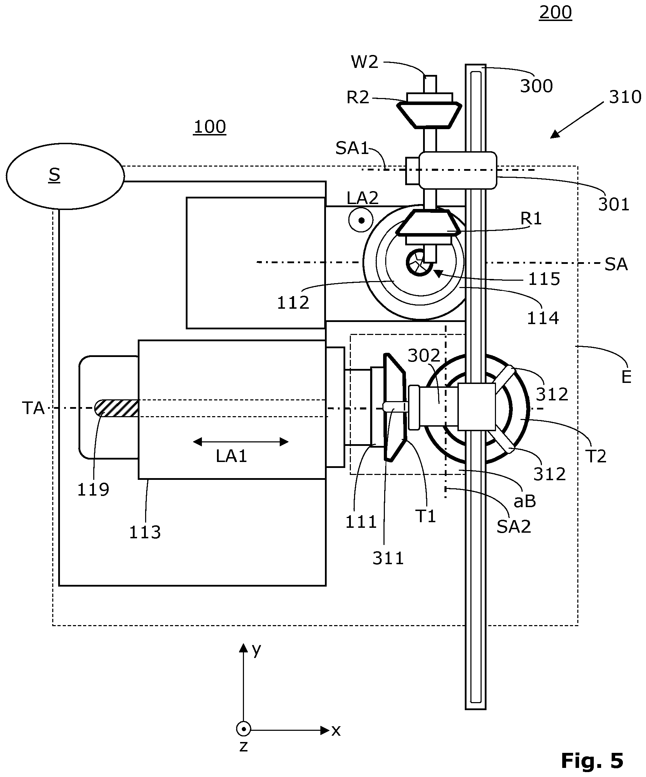

Die Spindelgruppe 111 und 112 können bei allen Ausführungsformen mit Spannmitteln (zum Beispiel in Form eines Spannfutters) zum Einspannen von Zahnrädern T, R ausgestattet sein. In Fig. 5 ist ein beispielhaftes Spannfutter 115 der Spindelgruppe 112 andeutungsweise zu erkennen.

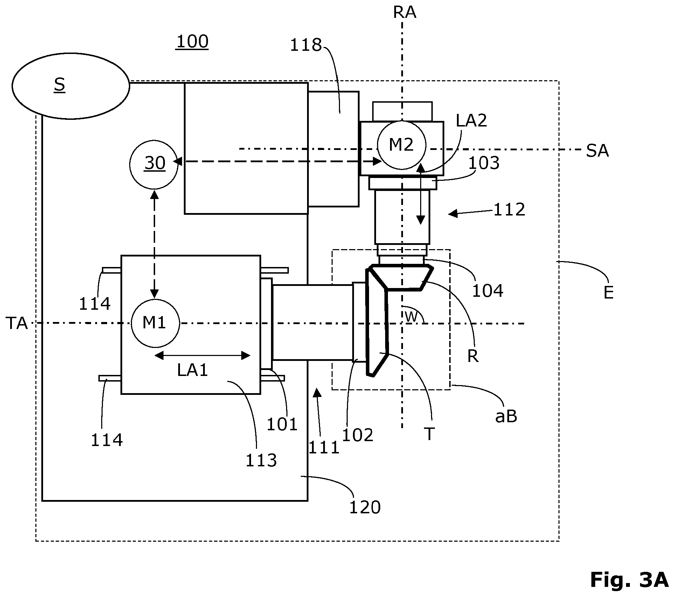

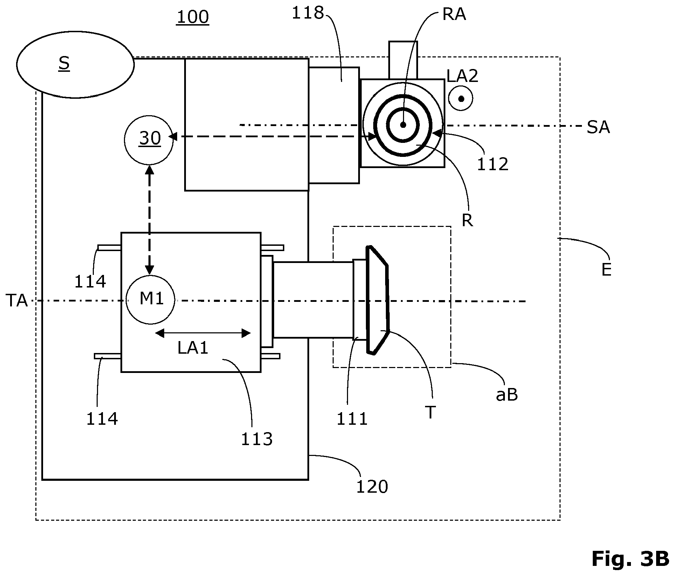

Vorzugsweise werden bei allen Ausführungsformen der Erfindung beide Spindelgruppen 111 und 112 je von einem separaten drehzahlgeregelten Elektromotor M1 und M2 angetrieben. Durch ein elektronisches Getriebe 30, auch elektrische Welle genannt, können die beiden Elektromotoren M1 und M2 in zeitlicher Abhängigkeit und synchron miteinander verbunden/gekoppelt werden. In Fig. 3A und Fig. 3B sind diese Verbindung/Kopplung der beiden Motoren M1 und M2 und das entsprechende Getriebe 30 in rein schematischer Form dargestellt. Es ist hinlänglich bekannt, zwei Elektromotoren M1 und M2 mit einem elektrischen Steuersystem bzw. einem elektronischen Getriebe synchron miteinander zu verbinden (siehe z.B. die Patentschriften CH 582 038 oder EP 0 263 947).

Weiterhin ist eine erste Linearachse LA1 vorgesehen, die zum Ausführen einer ersten Linearverschiebung der ersten Spindelgruppe 111 samt des ersten Zahnrads T relativ zu der zweiten Spindelgruppe 112 samt des zweiten Zahnrads R dient. Bei dem in Fig. 3A gezeigten Ausführungsbeispiel kann konkret die Spindel 102 der ersten Spindelgruppe 111 samt des ersten Zahnrads T horizontal linear verlagert werden. Die erste Linearachse LA1 ermöglicht ein Verlagern parallel zu der ersten Rotationsachse TA. Die erste Linearachse LA1 kann zum Beispiel in Form eines Schlittens 113 realisiert sein, der entlang von Schienen oder Nuten 114 geführt ist, wie in Fig. 3A angedeutet. Die Schienen oder Nuten 114 verlaufen hier entlang eines Maschinentischs oder -gestells 120 parallel zur Rotationsachse TA.

Weiterhin ist eine zweite Linearachse LA2 vorgesehen, die zum Ausführen einer zweiten Linearverschiebung der ersten Spindelgruppe 111 samt des ersten Zahnrads T relativ zu der zweiten Spindelgruppe 112 samt des zweiten Zahnrads R, ausgelegt ist. Bei dem in Fig. 3A und 3B gezeigten Ausführungsbeispiel kann die zweite Spindelgruppe 112 samt des zweiten Zahnrads R durch die zweite Linearachse LA2 parallel zu der zweiten Rotationsachse RA verschoben werden. Die zweite Linearachse LA2 ist in diesem konkreten Ausführungsbeispiel als eine Nebenachse ausgelegt, die von einer Schwenkachse SA getragen wird. Details zu der Schwenkachse SA werden im Folgenden beschrieben.

Je nach Ausführungsform können die Linearverschiebungen so erfolgen, dass ein Spindelstock gesamthaft verschoben wird (wie z.B. die erste Spindelgruppe 111 in Fig. 3A) oder dass nur die Spindel selbst verschoben wird (wie die zweite Spindelgruppe 112 in Fig. 3A). Im letzteren Fall befindet sich die entsprechende Linearachse (hier z.B. die Linearachse LA2) auf einer Schwenkachse (hier z.B. die Schwenkachse SA).

Um einen Läpper oder Tester ohne Einstellmöglichkeit des Achswinkels zu betreiben sind mindesten fünf Achsen notwendig. Beim derzeitigen Stand der Technik, wie eingangs in Zusammenhang mit den Figuren 1 und 2 beschrieben, sind das drei Linearachsen (z.B. LA1, LA2, LA3) sowie zwei Rotationsachsen (z.B. RA und TA) für die Drehungen von Ritzel R und Tellerrad T. Falls noch der Achswinkel einstellbar sein soll, muss eine sechste Achse in Form einer Rotationsachse vorhanden sein, z.B. um eine Drehung des Ritzelspindelstocks zu ermöglichen.

Anstatt eine dritte Linearachse (z.B. LA3) vorzusehen, wie dies zum Beispiel bei den Figuren 1 und 2 der Fall ist, sieht die Erfindung eine Schwenkachse SA vor, die zum Schwenken der ersten Spindelgruppe 111 samt des ersten Zahnrads T oder zum Schwenken der zweiten Spindelgruppe 112 samt des zweiten Zahnrads R um diese Schwenkachse SA ausgelegt ist. Bei dem in Fig. 3A und 3B gezeigten Ausführungsbeispiel kann konkret die zweite Linearachse LA2 mit der zweiten Spindelgruppe 112 zusammen mit dem zweiten Zahnrad R um die Schwenkachse SA geschwenkt werden. Die Schwenkachse SA verläuft hier parallel zur Zeichenebene und parallel zur Achse TA.

Bei der Erfindung gibt es bei allen Ausführungsformen also mindestens fünf Achsen, wobei zwei Achsen als Linearachsen ausgeführt sind, damit das Ritzel R und das Rad T in der Bearbeitungs- oder Testposition horizontal verschoben werden können. Drei Achsen sind bei allen Ausführungsformen als Rotationsachsen ausgelegt, um Drehungen von Ritzel R (um die Achse RA) und Rad T (um die Achse TA) und das Schwenken eines der beiden Zahnräder R oder T zu ermöglichen. Die entsprechende Rotationsachse wird hier als Schwenkachse SA bezeichnet.

Soll bei einer erfindungsgemässen Ausführungsform zusätzlich der Achswinkel einstellbar sein, so ist das mit einer weiteren Schwenkachse für das Rad T machbar. Bei einem Achswinkel von Null Grad stehen dann beide Achsen senkrecht nach oben.

Die Ausführung der Schwenkachse SA mit Spindel 104 und integrierter Linearverschiebungsachse LA2 kann optional bei allen Ausführungsformen für das Rad T genauso ausgeführt sein wie für das Ritzel R.

Die Schwenkachse SA kann bei allen Ausführungsformen als Achse ausgeführt sein (hier zur besseren Unterscheidung als Hauptachse bezeichnet), die mindestens eine Nebenachse trägt (in Fig. 3A und 3B sind die zweite Linearachse LA2 und die Rotationsachse RA als Nebenachsen ausgelegt, die von der Schwenkachse SA als Hauptachse getragen werden).

Die Rotationsachse TA und die Schwenkachse SA können in dem Ausführungsbeispiel der Fig. 3A und 3B in eine gemeinsame Ebene E projiziert werden.

In Fig. 3A ist die Vorrichtung 100 in einer Arbeitsstellung gezeigt, bei der sich die beiden Zahnräder T und R in einem aktiven (Maschinen-)Bereich aB (auch Arbeitsbereich genannt) befinden. In diesem aktiven Bereich aB findet das Messen, Prüfen (Testen) oder das Läppen statt.

Zum Einbringen eines Zahnrads R und/oder T in den aktiven Bereich aB oder zum Entnehmen eines Zahnrads R und/oder T aus diesem Bereich aB, kann gemäss Erfindung eine Schwenkbewegung um die Schwenkachse SA ausgeführt werden. Durch das Schwenken um die Schwenkachse SA wird eines der Zahnräder (im Falle der Figuren 3A und 3B das Ritzel R) aus dem aktiven Bereich aB heraus geführt. Die entsprechende Stellung wird hier als Handhabungsstellung bezeichnet.

Fig. 3B zeigt eine schematische Draufsicht der ersten Vorrichtung 100, wobei das Ritzel R durch ein Schwenken um die Schwenkachse SA aus dem aktiven Bereich aB heraus bewegt wurde. Das Ritzel R befindet sich in der gezeigten Entnahmestellung in einer horizontalen Orientierung. Die Ritzelachse RA steht jetzt senkrecht auf der Zeichenebene. Auch die zweite Linearachse LA2 hat bei dieser Ausführungsform durch das Schwenken eine andere Orientierung im Raum erhalten. Die zweite Linearachse LA2 steht jetzt auch senkrecht auf der Zeichenebene.

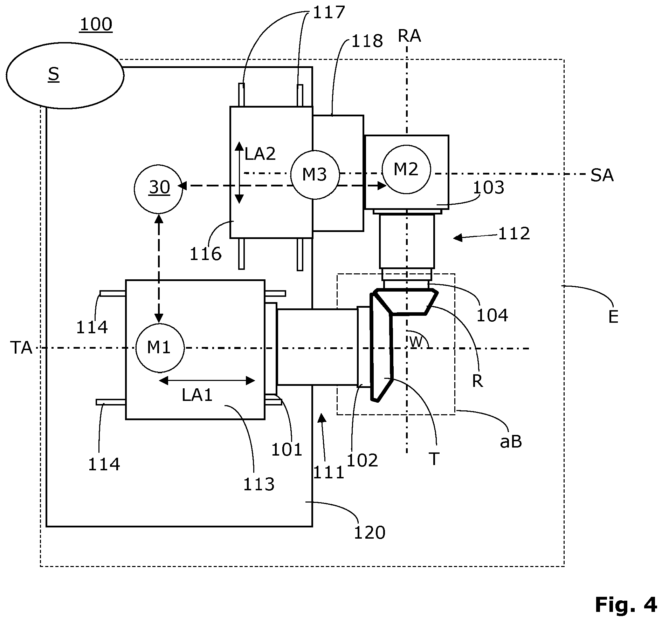

In Fig. 4 ist eine weitere Ausführungsform einer Vorrichtung 100 der Erfindung gezeigt, die zum Läppen oder Testen von Zahnrädern T, R ausgelegt ist. Die Vorrichtung 100 umfasst eine erste Spindelgruppe 111 zum Einspannen eines ersten Zahnrads T, wobei das erste Zahnrad T an der ersten Spindelgruppe 111 drehbar um eine erste Rotationsachse TA gelagert ist. Weiterhin ist eine zweite Spindelgruppe 112 zum Einspannen eines zweiten Zahnrads R vorgesehen, wobei das zweite Zahnrad R an der zweiten Spindelgruppe 112 drehbar um eine zweite Rotationsachse RA gelagert ist.

Bei der Ausführungsform nach Fig. 4 dient eine erste Linearachse LA1 zum Ausführen einer ersten Linearverschiebung der ersten Spindelgruppe 111 samt des ersten Zahnrads T. Die erste Spindelgruppe 111 kann relativ zu der zweiten Spindelgruppe 112 verschoben werden. Wie in Fig. 4 gezeigt, kann die erste Linearachse LA1 einen Schlitten 113 und zwei Führungsschienen oder Nuten 114 umfassen (analog zu den Figuren 3A und 3B).

Bei der Ausführungsform nach Fig. 4 dient eine zweite Linearachse LA2 zum Ausführen einer zweiten Linearverschiebung der zweiten Spindelgruppe 112 samt des zweiten Zahnrads R. Die erste Spindelgruppe 111 kann relativ zu der zweiten Spindelgruppe 112 verschoben werden. Wie in Fig. 4 gezeigt, kann die zweite Linearachse LA2 einen Schlitten 116 und zwei Führungsschienen oder Nuten 117 umfassen (hier liegt ein Unterschied gegenüber den Figuren 3A und 3B).

Die Vorrichtung 100 umfasst eine Schwenkachse SA zum Schwenken der zweiten Spindelgruppe 112 samt des zweiten Zahnrads R. Anders als bei der Ausführungsform der Figuren 3A und 3B, wird die zweite Linearachse LA2 nicht mit geschwenkt. Die zweite Linearachse LA2 dient hier quasi als eine Hauptachse, während die Schwenkachse SA als Nebenachse dieser Hauptachse ausgelegt ist.

Wenn man bei der Ausführungsform nach Fig. 4 die Achskonstellation oder Baugruppe auf der Seite des Rades T so ausführt wie auf der Seite des Ritzels R, dann erhält man eine erfindungsgemässe Vorrichtung 100 (nicht in einer separaten Darstellung gezeigt) mit einer zusätzlichen Schwenkachse und mit zwei quasi identischen Baugruppen.

Bei weiteren Ausführungsformen der Erfindung, die nicht in separaten Darstellungen gezeigt sind, können beide Linearachsen LA1 und LA2 zum Beispiel im Bereich der ersten Spindelgruppe 111 angeordnet sein, während die zweite Spindelgruppe 112 nicht linear bewegbar ist, und/oder umgekehrt.

Die Schwenkachse SA zum Schwenken einer der beiden Spindelgruppen 111 oder 112 ist vorzugsweise bei allen Ausführungsformen der Erfindung in Form einer Schwenktrommel 118 ausgebildet. Der oder die Antriebsmotoren (z.B. ein Elektromotor M3, wie in Fig. 4 beispielhaft gezeigt) zum Ausführen der Schwenkbewegung um die Schwenkachse SA ist/sind vorzugsweise an einer dem aktiven Bereich aB abgewandten Seite der Vorrichtung 100 angeordnet und er/sie ist/sind mit derjenigen Spindelgruppe 111 oder 112 über eine nicht gezeigte Übertragungsmechanik verbunden. Der mechanische Aufbau wird so gewählt, dass das Schwenken im Wesentlichen spielfrei um die Schwenkachse SA erfolgt.

Die Schwenkachse SA ist vorzugsweise bei allen Ausführungsformen der Erfindung so ausgelegt, dass sie mindestens eine Schwenkbewegung von 90 Grad ermöglicht (z.B. aus der 0 Grad-Stellung in Fig. 3A in die 90 Grad-Stellung in Fig. 3B).

Bei allen Ausführungsformen der Erfindung kann/können die Linearachse/n LA1 und/oder LA2 statt eines schienengeführten Schlittens auch einen Spindelantrieb umfassen, der durch ein motorisch angetriebenes Drehen einer Gewindespindel 119 (wie beispielhaft in Fig. 5 gezeigt) um eine Spindelachse eine Linearbewegung erzeugt.

In Fig. 5 ist eine weitere Ausführungsform der Erfindung gezeigt, die einen Spindelantrieb mit einer Gewindespindel 119 umfasst. Wird diese Gewindespindel 119 motorisch angetrieben gedreht, so verlagert sich der Schlitten 113 horizontal, wie durch den Doppelpfeil LA1 angedeutet.

Eine Vorrichtung 100 der Erfindung kann besonders vorteilhaft in eine halb- oder vollautomatisierte Gesamtanlage 200 integriert werden. Eine solche Gesamtanlage 200 umfasst in diesem Fall mindestens eine Vorrichtung 100 und einen steuerbaren Greifer 310. Der steuerbare Greifer 310 ist, wie in Fig. 5 in einer schematischen Draufsicht angedeutet, relativ zu der Vorrichtung 100 verfahrbar. Im gezeigten Beispiel ist ein (Horizontal-)Portal 300 vorgesehen, das mindestens einen Teil der Vorrichtung 100 überbrückt.

Um die Gesamtkonstellation dieser beispielhaften Ausführungsform besser beschreiben zu können, ist in Fig. 5 ein x-y-z Koordinatensystem gezeigt. Das (Horizontal-)Portal 300 liegt parallel zu der x-y-Ebene und erstreckt sich entlang der y-Achse. Um mindestens eines der Zahnräder T und/oder R der Vorrichtung 100 zuführen oder aus der Vorrichtung 100 entnehmen zu können, ist der Greifer 310 mit einer ersten Vorrichtung 301 zur Handhabung des ersten Zahnrads T und/oder mit einer zweiten Vorrichtung 302 zur Handhabung des zweiten Zahnrads R ausgestattet.

Die Vorrichtung/en 301 und/oder 302 können vorzugsweise bei allen Ausführungsformen der Erfindung parallel zur y-Achse entlang des Portals 300 verschoben werden und sie können parallel zur z-Achse nach oben und unten bewegt werden.

Fig. 5 zeigt eine spezielle Anlage 200, deren Greifer 310 sowohl eine erste Vorrichtung 301 zur Handhabung des ersten Zahnrads T als auch eine zweite Vorrichtung 302 zur Handhabung des zweiten Zahnrads R aufweist.

Um das Einbringen und Entnehmen von Zahnrädern R zu beschleunigen, ist die erste Vorrichtung 301 vorzugsweise bei allen Ausführungsformen als Doppelvorrichtung ausgelegt, die zwei Ritzel R1 und R2 gleichzeitig handhaben kann. In Fig. 5 ist eine Moment nach der Entnahme des Ritzels R1 aus der Spindelgruppe 112 gezeigt. Die erste Vorrichtung 301 trägt in diesem Moment sowohl das Ritzel R1 als auch das Ritzel R2. Durch das Ausführen einer 90-Grad Schwenkbewegung um eine Schwenkachse SA1, kann das Ritzel R2 in eine nach unten hängende Position gebracht werden. Wenn nun die erste Vorrichtung 301 genau oberhalb der Spindelgruppe 112 positioniert und eine Absenkbewegung parallel zur negativen z-Achse ausgeführt wird, kann die Welle W2 des Ritzels R2 in das Spannfutter 115 der Spindelgruppe 112 eingebracht und dort festgespannt werden.

Um das Einbringen und Entnehmen von Zahnrädern T zu beschleunigen, ist die zweite Vorrichtung 302 vorzugsweise bei allen Ausführungsformen als Doppelvorrichtung ausgelegt, die zwei Tellerräder T1 und T2 gleichzeitig handhaben kann. In Fig. 5 ist eine Moment kurz vor der Entnahme des ersten Tellerrads T1 aus der Spindelgruppe 111 gezeigt. Greifarme 311 der zweiten Vorrichtung 302 haben bereits das erste Tellerrad T1 umfasst. Das erste Tellerrad T1 befindet sich noch in einer vertikalen Orientierung während das zweite Tellerrad T2, das als nächstes an der Spindelgruppe 111 befestigt werden soll, sich in einer horizontalen Orientierung befindet. Zwei der drei Greifarme 312, die das zweite Tellerrad T2 greifen, sind in Fig. 5 zu erkennen. Durch das Ausführen einer 90-Grad Schwenkbewegung um eine Schwenkachse SA2, kann das zweite Tellerrad T2 in die jetzige Position des ersten Tellerrads T1 gebracht werden. Das erste Tellerrad T1 befindet sich dann in einer horizontalen Orientierung oberhalb des Portals 300.

Im Zusammenhang mit der Fig. 5 ist zu erwähnen, dass sich die Vorrichtung 100 der Anlage 200 nicht in der Arbeitsstellung sondern in der Handhabungsstellung befindet. Die Vorrichtung 100 wurde durch ein Schwenken der Spindelgruppe 112 um die Schwenkachse SA von der Arbeitsstellung in die Handhabungsstellung überführt. In der Handhabungsstellung ist nach dem Schwenken das Spannfutter 115 der Spindelgruppe 112 so orientiert, dass z.B. die Welle W2 des Ritzels R2 in eine Öffnung des Spannfutters 115 eingesteckt werden kann.

Die Vorrichtung 100 der Erfindung kann bei allen Ausführungsformen einen Maschinentisch oder ein Maschinengestell 120 aufweisen, das die einzelnen Elemente der Vorrichtung 100 trägt und der ganzen Konstellation genügend Steifigkeit verleiht. Der Greifer 310, falls vorhanden, kann bei allen Anlagenausführungsformen mit dem Maschinentisch oder dem Maschinengestell 120 verbunden oder separat von diesem ausgeführt sein.

Vorzugsweise umfassen allen Ausführungsformen der Vorrichtung 100 bzw. der Anlage 200 eine NC-Steuerung S. Die NC-Steuerung S ist in allen Figuren 3A bis 5 nur durch ein Oval dargestellt. Die NC-Steuerung S steht mit allen wesentlichen Elementen der Vorrichtung 100 bzw. der Anlage 200 in Wirkverbindung. Bei allen Ausführungsformen sind in diesem Fall mindestens die beiden Linearachsen LA1 und LA2 sowie die Schwenkachse SA numerisch gesteuerte Achsen. Bei Bedarf kann für das Steuern des Greifers 310 eine separate Steuerung vorgesehen sein. Es kann aber auch die NC-Steuerung S zum Steuern der Bewegungen des Greifers 310 eingesetzt werden.

Die Schwenkachsen SA1 und/oder SA2 können auch bei allen Ausführungsformen anders angeordnet sein als in Fig. 5 gezeigt.

Eine Anlage 200 kann auch bei allen Ausführungsformen statt einer Portalanordnung 300, wie in Fig. 5 gezeigt, einen oder mehrere Roboterarme umfassen, der/die das Handhaben des/der Zahnräder T und/oder R vornimmt/vornehmen.

Vorzugsweise umfassen allen Ausführungsformen der Vorrichtung 100 zwei Rotationsachsen RA und TA, zwei Linearachsen LA1, LA2 und eine Schwenkachse SA.

Vorzugsweise umfassen allen Ausführungsformen der Vorrichtung 100 Sensoren (z.B. Winkelgeber, Weggeber), um das Testen und/oder das Läppen überwachen und steuern zu können.

Vorzugsweise umfassen alle Ausführungsformen der Vorrichtung 100 zwei Schwenkachsen SA, wobei eine der Schwenkachsen der ersten Spindelgruppe 111 und eine der Schwenkachsen der zweiten Spindelgruppe 112 zugeordnet sind. Man kann in einer solchen Vorrichtung 100 mit zwei Schwenkachsen Achswinkel beim Paaren der Zahnräder T und R einstellen, die ungleich 90-Grad sind. In einer solchen Vorrichtung 100 kann man auch Stirnradpaare prüfen, wenn beide Spindelgruppen 111 und 112 so um 90-Grad geschwenkt wurden, dass die Rotationsachsen TA und RA parallel zueinander verlaufen und senkrecht zu der Ebene E stehen.

**Bezugszeichen**

| | |
|---|---|
| Testmaschine/Tester | 10 |
| erste Spindel | 11 |
| zweite Spindel | 12 |
| | |
| Läppmaschine | 20 |
| erste Spindel | 21 |
| zweite Spindel | 22 |
| | |
| elektronisches Getriebe | 30 |
| Vorrichtung / Maschine | 100 |
| Spindelstock | 101 |
| Spindel | 102 |
| Spindelstock | 103 |
| Spindel | 104 |
| erste Spindelgruppe | 111 |
| Schlitten | 113 |
| Schienen | 114 |
| zweite Spindelgruppe | 122 |
| Spannfutter | 115 |
| Schlitten | 116 |
| Schienen | 117 |
| Schwenktrommel | 118 |
| Gewindespindel | 119 |
| Maschinentisch oder -gestell | 120 |
| | |
| Anlage | 200 |
| | |
| Portal | 300 |
| 1. Greifergruppe | 301 |
| 2. Greifergruppe | 302 |
| Greifer | 310 |
| Greifarme | 311 |
| Greifarme | 312 |
| | |
| aktiver Bereich | aB |
| Ebene/Ebenenprojektion | E |
| Ritzel | R |
| Ritzel | R1, R2 |
| Ritzelachse | RA |
| erste Linearachse (G-Achse) | LA1 |
| zweite Linearachse (H-Achse) | LA2 |
| dritte Linearachse (V-Achse) | LA3 |
| Elektromotor | M1 |
| Elektromotor | M2 |
| Elektromotor | M3 |
| NC-Steuerung | S |
| Schwenkachse | SA |
| Schwenkachse | SA1 |
| Schwenkachse | SA2 |
| Tellerrad | T |
| Tellerrad | T1, T2 |
| Tellerradachse | TA |
| Welle des Ritzels R2 | W2 |

## Patentansprüche

1. Vorrichtung (100) zum Läppen oder Prüfen von Zahnrädern (T, R), die mindestens fünf Achsen aufweist, mit
- einer ersten Spindelgruppe (111) zum Einspannen eines ersten Zahnrads (T), wobei das erste Zahnrad (T) an der ersten Spindelgruppe (111) drehbar um eine erste Rotationsachse (TA) lagerbar ist,
- einer zweiten Spindelgruppe (112) zum Einspannen eines zweiten Zahnrads (R), wobei das zweite Zahnrad (R) an der zweiten Spindelgruppe (112) drehbar um eine zweite Rotationsachse (RA) lagerbar ist,
- einer ersten Linearachse (LA1) zum Ausführen einer ersten relativen Linearverschiebung der ersten Spindelgruppe (111) samt des ersten Zahnrads (T) in Bezug zu der zweiten Spindelgruppe (112) samt des zweiten Zahnrads (R),
- mit einer zweiten Linearachse (LA2) zum Ausführen einer zweiten relativen Linearverschiebung der ersten Spindelgruppe (111) samt des ersten Zahnrads (T) in Bezug zu der zweiten Spindelgruppe (112) samt des zweiten Zahnrads (R), **dadurch gekennzeichnet, dass**:
- eine Schwenkachse (SA) zum Schwenken der ersten Spindelgruppe (111) samt des ersten Zahnrads (T) dient und wobei die Schwenkachse (SA) parallel zu der zweiten Rotationsachse (RA) liegt, oder
- dass eine Schwenkachse (SA) zum Schwenken der zweiten Spindelgruppe (112) samt des zweiten Zahnrads (R) um diese Schwenkachse (SA) dient und wobei die Schwenkachse (SA) parallel zu der ersten Rotationsachse (TA) liegt, oder
- dass die Vorrichtung (100) eine erste Schwenkachse (SA) zum Schwenken der ersten Spindelgruppe (111) samt des ersten Zahnrades (T) sowie eine zweite Schwenkachse zum Schwenken der zweiten Spindelgruppe (112) samt des zweiten Zahnrades (R) um diese zweite Schwenkachse umfasst,
wobei beide Spindelgruppen (111; 112) so um 90-Grad schwenkbar sind, dass die erste Rotationsachse (TA) und die zweite Rotationsachse (RA) parallel zueinander verlaufen und senkrecht zu einer horizontalen Ebene (E) stehen.

2. Vorrichtung (100) nach Anspruch 1 mit der ersten Schwenkachse (SA), die zum Schwenken der ersten Spindelgruppe (111) samt des ersten Zahnrads (T) dient, und mit der zweiten Schwenkachse (SA), die zum Schwenken der zweiten Spindelgruppe (112) samt des zweiten Zahnrads (R) dient, **dadurch gekennzeichnet, dass** durch ein Schwenken um die erste Schwenkachse (SA) und/oder um die zweite Schwenkachse (SA) ein Achswinkel zwischen dem ersten Zahnrad (T) und dem zweiten Zahnrad (R) vorgebbar ist, der ungleich 90 Grad beträgt.

3. Vorrichtung (100) nach Anspruch 1 oder 2, **dadurch gekennzeichnet, dass** in einer Arbeitsstellung der Vorrichtung (100) die erste Rotationsachse (TA) so senkrecht zu der zweiten Rotationsachse (RA) positionierbar ist, dass sich das erste Zahnrad (T) und das zweite Zahnrad (R) innerhalb eines aktiven Bereichs (aB) der Vorrichtung (100) im Eingriff befinden.

4. Vorrichtung (100) nach Anspruch 3, **dadurch gekennzeichnet, dass** in einer Handhabungsstellung der Vorrichtung (100) die erste Rotationsachse (TA) relativ zu der zweiten Rotationsachse (RA) verschwenkt wurde und sich nur noch das erste Zahnrad (T) oder das zweite Zahnrad (R) innerhalb des aktiven Bereichs (aB) befindet.

5. Vorrichtung (100) nach einem der Ansprüche 1 oder 2, **dadurch gekennzeichnet, dass** sie einen aktiven Bereich (aB) umfasst, in dem das erste Zahnrad (T) mit dem zweiten Zahnrad (R) in Eingriff bringbar und antreibbar sind.

6. Vorrichtung (100) nach Anspruch 1 mit der Schwenkachse (SA) zum Schwenken der ersten Spindelgruppe (111) samt des ersten Zahnrads (T), **dadurch gekennzeichnet, dass** die Schwenkachse (SA) so auslegt ist, dass das erste Zahnrad (T) durch das Schwenken der ersten Spindelgruppe (111) samt des ersten Zahnrads (T) aus einem aktiven Bereich (aB) der Vorrichtung (100) heraus bewegbar ist.

7. Vorrichtung (100) nach Anspruch 1 mit der Schwenkachse (SA) zum Schwenken der zweiten Spindelgruppe (112) samt des zweiten Zahnrads (R), **dadurch gekennzeichnet, dass** die Schwenkachse (SA) so auslegt ist, dass das zweite Zahnrad (R) durch das Schwenken der zweiten Spindelgruppe (112) samt des zweiten Zahnrads (R) aus einem aktiven Bereich (aB) der Vorrichtung (100) heraus bewegbar ist.

8. Anlage (200) mit mindestens einer Vorrichtung (100) nach einem der Ansprüche 1 bis 7, **dadurch gekennzeichnet, dass** die Anlage (200) einen steuerbaren Greifer (310) aufweist,
- der relativ zu der Vorrichtung (100) verfahrbar ist, und
- der dazu ausgelegt ist mindestens eines der Zahnräder (T, R) der Vorrichtung (100) zuführen oder aus der Vorrichtung (100) zu entnehmen.

9. Anlage (200) nach Anspruch 8, **dadurch gekennzeichnet, dass** der Greifer (310)
- dazu ausgelegt ist eines der Zahnräder (T, R) zu greifen, während dieses in der entsprechenden Spindelgruppe (111, 112) gelagert ist, und
- das entsprechende Zahnrad (T, R) zu entnehmen, nachdem dieses Zahnrad (T, R) von der Spindelgruppe (111, 112) freigegeben wurde.

10. Anlage (200) nach Anspruch 8 oder 9, **dadurch gekennzeichnet, dass** der Greifer (20) dazu ausgelegt ist
- eines der Zahnräder (T, R) der Vorrichtung (100) zuzuführen,
- dieses Zahnrad (T, R) an die entsprechende Spindelgruppe (111, 112) zu übergeben, und
- nach einem Einspannen dieses Zahnrads (T, R) an der entsprechenden Spindelgruppe (111, 112) aus einem Bewegungsbereich der Spindelgruppen (111, 112) wegbewegt zu werden.

11. Anlage (200) nach Anspruch 10, **dadurch gekennzeichnet, dass** der Greifer (310) eine Vorrichtung (301) zur Handhabung des ersten Zahnrads (T) und eine Vorrichtung (302) zur Handhabung des zweiten Zahnrads (R) umfasst.

## Claims

1. Apparatus (100) for the lapping or testing of gears (T, R), with at least five axis, with
- a first spindle group (111) for chucking a first gear (T), whereby the first gear (T) is mountable on the first spindle group (111) so that it is rotatable about a first axis of rotation (TA),
- a second spindle group (112) for chucking a second gear (R), whereby the second gear (R) is mountable on the second spindle group (112) so that it is rotatable about a second axis of rotation (RA),
- a first linear axis (LA1) for carrying out a first linear displacement of the first spindle group (111) with the first gear (T) relative to the second spindle group (112) with the second gear (R), and
- with a second linear axis (LA2) for carrying out a second linear displacement of the first spindle group (111) with the first gear (T) relative to the second spindle group (112) with the second gear (R),
**characterized**
- **in that** the apparatus (100) further comprises a swivel axis (SA) for pivoting the first spindle group (111) with the first gear (T), which swivel axis (SA) being parallel to the second axis of rotation (RA), or
- **in that** the apparatus (100) further comprises a swivel axis (SA) for pivoting the second spindle group (112) with the second gear (R) about this swivel axis (SA) which swivel axis (SA) being parallel to the first axis of rotation (TA), or
- **in that** the apparatus (100) further comprises a first swivel axis (SA) for pivoting the first spindle group (111) with the first gear (T) as well as a second swivel axis for pivoting the second spindle group (112) with the second gear (R) about this second swivel axis, wherein both spindle groups (111; 112) can be pivoted by 90 degrees such that the first axis of rotation (TA) and the second axis of rotation (RA) run parallel to one another and are perpendicular to a horizontal plane (E).

2. Apparatus (100) according to claim 1 with the first swivel axis (SA), which serves for pivoting the first spindle group (111) with the first gear (T), and with the second swivel axis (SA), which serves for pivoting the second spindle group (112) with the second gear (R), **characterized in that** by means of pivoting about the first swivel axis (SA) and/or about the second swivel axis (SA) a shaft angle unequal 90 degrees between the first gear (T) and the second gear (R) can be provided.

3. Apparatus (100) according to claim 1 or 2, **characterized in that** in a machining position of the apparatus (100) the first axis of rotation (TA) is positionable perpendicularly with respect to the second axis of rotation (RA) so that the first gear (T) and the second gear (R) are engaged within an active area (aB) of the apparatus (100).

4. Apparatus (100) according to claim 3, **characterized in that** in a handling position of the apparatus (100) the first axis of rotation (TA) was pivoted with respect to the second axis of rotation (RA) and either only the first gear (T) or the second gear (R) are arranged within the active area (aB).

5. Apparatus (100) according to one of the claims 1 or 2, **characterized in that** it comprises an active area (aB) in which the first gear (T) is engageable with the second gear (R) and driveable.

6. Apparatus (100) according to claim 1 with the swivel axis (SA) for pivoting the first spindle group (111) with the first gear (T), **characterized in that** the swivel axis (SA) is designed so that the first gear (T) by pivoting the first spindle group (111) with the first gear (T) is removable from an active area (aA) of the apparatus (100).

7. Apparatus (100) according to claim 1 with the swivel axis (SA) for pivoting the second spindle group (112) with the second gear (R), **characterized in that** the swivel axis (SA) is designed so that the second gear (R) by pivoting the second spindle group (112) with the second gear (R) is removable from an active area (aA) of the apparatus (100).

8. Facility (200) with at least one apparatus (100) in accordance with one of the claims 1 through 7, **characterized in that** the facility (200) comprise a controllable gripper (310),
- which is displaceable relative to the apparatus (100), and
- which is designed in order to feed one of the gears (T, R) into the apparatus (100) or remove it from the apparatus (100).

9. Facility (200) according to claim 8, **characterized in that** the gripper (310)
- is designed in order to grab one of the gears (T, R) while it is mounted in the corresponding spindle group (111, 112), and
- to remove the respective gear (T, R) after this gears (T, R) was released by the spindle group (111, 112).

10. Facility (200) according to claim 8 or 9, **characterized in that** the gripper (310) is designed in order to
- feed one of the gears (T, R) into the apparatus (100),
- hand over this gear (T, R) to the respective spindle group (111, 112), and
- be removed from a movement area of the spindle groups (111, 112) after a chucking of this gear (T, R) in the respective spindle group (111, 112).

11. Facility (200) according to claim 10, **characterized in that** the gripper (310) comprises an apparatus (301) for handling a first gear (T) and an apparatus (301) for handling a second gear (R).

## Revendications

1. Dispositif (100) de rodage ou de contrôle de roues dentées (T, R) présentant au moins cinq axes, avec
- un premier groupe mandrin (111) pour serrer une première roue dentée (T), la première roue dentée (T) pouvant être montée sur le premier groupe mandrin (111) de manière à pouvoir tourner autour d'un premier axe de rotation (TA),
- un deuxième groupe mandrin (112) pour serrer une deuxième roue dentée (R), la deuxième roue dentée (R) pouvant être montée sur le deuxième groupe mandrin (112) de manière à pouvoir tourner autour d'un deuxième axe de rotation (RA),
- un premier axe linéaire (LA1) pour effectuer un premier déplacement linéaire relatif du premier groupe mandrin (111) avec la première roue dentée (T) par rapport au deuxième groupe mandrin (112) avec la deuxième roue dentée (R),
- un deuxième axe linéaire (LA2) pour effectuer un deuxième déplacement linéaire relatif du premier groupe mandrin (111) avec la première roue dentée (T) par rapport au deuxième groupe mandrin (112) avec la deuxième roue dentée (R),
**caractérisé en ce que** :
- un axe de pivotement (SA) sert à faire pivoter le premier groupe mandrin (111) avec la première roue dentée (T) et **en ce que** l'axe de pivotement (SA) est parallèle au deuxième axe de rotation (RA), ou
- un axe de pivotement (SA) sert à faire pivoter le deuxième groupe mandrin (112) avec la deuxième roue dentée (R) autour de cet axe de pivotement (SA) et **en ce que** l'axe de pivotement (SA) est parallèle au premier axe de rotation (TA), ou
- le dispositif (100) comprend un premier axe de pivotement (SA) pour faire pivoter le premier groupe mandrin (111) avec la première roue dentée (T), ainsi qu'un deuxième axe de pivotement pour faire pivoter le deuxième groupe mandrin (112) avec la deuxième roue dentée (R) autour de ce deuxième axe de pivotement, dans lequel les deux groupes mandrins (111 ; 112) peuvent être pivotés de 90 degrés, de sorte que le premier axe de rotation (TA) et le deuxième axe de rotation (RA) s'étendent parallèlement l'un par rapport à l'autre et sont perpendiculaires à un plan horizontal (E).

2. Dispositif (100) selon la revendication 1 comprenant le premier axe de pivotement (SA) servant à faire pivoter le premier groupe mandrin (111) avec la première roue dentée (T) et comprenant le deuxième axe de pivotement (SA) servant à faire pivoter le deuxième groupe mandrin (112) avec la deuxième roue dentée (R), **caractérisé en ce que** le pivotement autour du premier axe de pivotement (SA) et/ou autour du deuxième axe de pivotement (SA) permet de prédéfinir un angle d'axe entre la première roue dentée (T) et la deuxième roue dentée (R) qui est différent de 90 degrés.

3. Dispositif (100) selon la revendication 1 ou 2, **caractérisé en ce que**, dans une position de travail du dispositif (100), le premier axe de rotation (TA) peut être positionné perpendiculairement au deuxième axe de rotation (RA), de sorte que la première roue dentée (T) et la deuxième roue dentée (R) se trouvent en prise dans une zone active (aB) du dispositif (100).

4. Dispositif (100) selon la revendication 3, **caractérisé en ce que**, dans une position de manipulation du dispositif (100), le premier axe de rotation (TA) a été pivoté par rapport au deuxième axe de rotation (RA) et **en ce que** seule la première roue dentée (T) ou la deuxième roue dentée (R) se trouve encore dans la zone active (aB).

5. Dispositif (100) selon l'une des revendications 1 ou 2, **caractérisé en ce qu'**il comprend une zone active (aB) dans laquelle la première roue dentée (T) peut être amenée en prise avec la deuxième roue dentée (R) et entraînée par cette dernière.

6. Dispositif (100) selon la revendication 1 comprenant l'axe de pivotement (SA) pour faire pivoter le premier groupe mandrin (111) avec la première roue dentée (T), **caractérisé en ce que** l'axe de pivotement (SA) est conçu de telle sorte que la première roue dentée (T) peut être déplacée en-dehors d'une zone active (aB) du dispositif (100) par pivotement du premier groupe mandrin (111) avec la première roue dentée (T).

7. Dispositif (100) selon la revendication 1, comprenant l'axe de pivotement (SA) pour faire pivoter le deuxième groupe mandrin (112) avec la deuxième roue dentée (R), **caractérisé en ce que** l'axe de pivotement (SA) est conçu de telle sorte que la deuxième roue dentée (R) peut être déplacée en-dehors d'une zone active (aB) du dispositif (100) par pivotement du deuxième groupe mandrin (112) avec la deuxième roue dentée (R).

8. Installation (200) comprenant au moins un dispositif (100) selon l'une des revendications 1 à 7, **caractérisée en ce que** l'installation (200) présente un système de préhension (310) pouvant être commandé
- qui peut être déplacé par rapport au dispositif (100), et
- qui est conçu pour amener au moins une des roues dentées (T, R) vers le dispositif (100) ou pour l'en sortir.

9. Installation (200) selon la revendication 8, **caractérisée en ce que** le système de préhension (310)
- est conçu pour saisir une des roues dentées (T, R) pendant que cette dernière est montée sur le groupe mandrin correspondant (111, 112), et
- est conçu pour retirer la roue dentée correspondante (T, R) après que cette roue dentée (T, R) a été libérée du groupe mandrin (111, 112).

10. Installation (200) selon la revendication 8 ou 9, **caractérisée en ce que** le système de préhension (20) est conçu
- pour amener une des roues dentées (T, R) vers le dispositif (100),
- pour remettre cette roue dentée (T, R) au groupe mandrin correspondant (111, 112), et
- après fixation de cette roue dentée (T, R) sur le groupe mandrin correspondant (111, 112), pour se déplacer en-dehors d'une zone de déplacement des groupes mandrins (111, 112).

11. Installation (20) selon la revendication 10, **caractérisée en ce que** le système de préhension (310) comprend un dispositif (301) pour manipuler la première roue dentée (T) et un dispositif (302) pour manipuler la deuxième roue dentée (R).
